(19) Europäisches Patentamt
European Patent Office
Office européen des brevets

(11) Veröffentlichungsnummer: **0 170 921**
**B1**

(12) # EUROPÄISCHE PATENTSCHRIFT

(45) Veröffentlichungstag der Patentschrift: **01.06.88**

(51) Int. Cl.⁴: **C 08 G 75/02**, C 08 L 81/02, C 08 K 9/02

(21) Anmeldenummer: **85108574.6**

(22) Anmeldetag: **10.07.85**

(54) **Faserverstärktes bzw. gefülltes Polyphenylensulfid.**

(30) Priorität: **21.07.84 DE 3426918**

(43) Veröffentlichungstag der Anmeldung:
**12.02.86 Patentblatt 86/7**

(45) Bekanntmachung des Hinweises auf die Patenterteilung:
**01.06.88 Patentblatt 88/22**

(84) Benannte Vertragsstaaten:
**BE DE FR GB IT**

(56) Entgegenhaltungen:
**EP - A - 0 074 632**
**EP - A - 0 100 934**
**EP - A - 0 108 978**
**EP - A - 0 110 118**
**DE - A - 2 623 333**
**US - A - 4 365 037**
**US - A - 4 425 384**

**PATENT ABSTRACTS OF JAPAN, Band 8, Nr. 168 (C-236)[1605], 3. August 1984; & JP - A - 59 68370 (TORAY K.K.) 18.04.1984; (Kat. A)**

(73) Patentinhaber: **BAYER AG, Konzernverwaltung RP Patentabteilung, D-5090 Leverkusen 1 Bayerwerk (DE)**

(72) Erfinder: **Reichert, Karl-Heinz, Prof. Dr., Olwenstrasse 39b, D-1000 Berlin 28 (DE)**
Erfinder: **Koschinski, Ingo, Dipl.-Ing., Weisestrasse 46, D-1000 Berlin 44 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 170 921 B1

**Beschreibung**

Die Erfindung betrifft faserverstärktes bzw. gefülltes Polyphenylensulfid und ein Verfahren zu dessen Herstellung.

Es ist bekannt, Polyphenylensulfide durch Einarbeitung z.B. von Kohle- und Glasfasern zu verstärken (JP-A-56 004 654). Dabei werden beim Extrudieren oder Spritzgiessen die Fasern dem Polyphenylensulfid mechanisch zugemischt. Die Eigenschaften derartig verstärkter Materialien sind in vielen Fällen jedoch nicht immer ganz befriedigend.

Es wurde nun gefunden, dass das Eigenschaftsprofil von faserverstärktem Polyphenylensulfid verbessert werden kann, wenn bei der Polymerisationsreaktion zur Herstellung von Polyphenylensulfid chemisch aktivierte Fasern oder Füllstoffe zugegen sind.

Gegenstand der Erfindung ist daher verstärktes Polyphenylensulfid, das dadurch gekennzeichnet ist, dass die Polykondensation zur Herstellung von Polyphenylensulfid in Gegenwart von chemisch durch Behandlung mit Halogen, Thionylchlorid, Ozon, konzentrierter Schwefelsäure oder Salpetersäure aktivierten Fasern oder Füllstoffen und gegebenenfalls Zusatzstoffen durchgeführt wird.

Die Polykondensation zur Herstellung des Polyphenylensulfids kann analog z.B. zu den aus US-PS 3 354 129, 3 876 592, 2 513 188, 2 538 941, DE-AS 2 453 749, DE-OS 2 623 333 bekannten Verfahren durchgeführt werden.

Bei der Herstellung der erfindungsgemäss verstärkten oder gefüllten Polyphenylensulfide wird eine chemisch aktivierte Faser und gegebenenfalls Füllstoffe der Umsetzungslösung, die das Dihalogenbenzol, gegebenenfalls einen Trihalogenaromaten, Katalysator und Lösungsmittel enthält, zugesetzt und dann wird die Polymerisation durchgeführt.

Gegenstand der Erfindung ist weiterhin ein Verfahren zur Herstellung von gegebenenfalls verzweigten, verstärkten Polyphenylensulfiden aus

a) 50-100 Mol-% Dihalogenaromaten der Formel

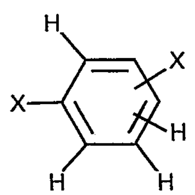

(I),

und 0-50 Mol-% Dihalogenaromaten der Formel

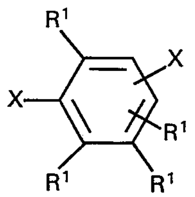

(II),

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei ortho-ständige Reste $R^1$ zu einem aromatischen oder heterocyclischen Ring verknüpft sein können und immer ein Rest $R^1$ verschieden von Wasserstoff ist und

b) 0-3 Mol-%, bevorzugt 0,1 bis 2,9 Mol-%, besonders bevorzugt 0,4 bis 2,4 Mol-%, bezogen auf die Summe der Dihalogenaromaten der Formel I und II, eines Tri- oder Tetrahalogenaromaten der Formel

$$ArX_n \quad (III),$$

wobei

Ar ein aromatischer oder heterocyclischer Rest ist,
X für Halogen wie Chlor oder Brom steht und
n 3 oder 4 ist und

c) Alkalisulfiden, bevorzugt Natrium- oder Kaliumsulfid oder deren Mischung, bevorzugt in Form ihrer Hydrate oder wässrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1 liegt, in einem organischen Lösungsmittel, gegebenenfalls unter Mitverwendung von Katalysatoren und/oder Cosolventien, dadurch gekennzeichnet, dass dem Umsetzungsgemisch chemisch durch Behandlung mit Halogen, Thionylchlorid, Ozon, konzentrierter Schwefelsäure und Salpetersäure aktivierte Fasern und Füllstoffe und gegebenenfalls Zusatzstoffe zugesetzt werden und die Umsetzung bei einer Temperatur von 160°C bis 265°C, vorzugsweise 165°C bis 250°C durchgeführt wird.

Als Katalysatoren können für diesen Zweck übliche Substanzen in üblichen Mengen eingesetzt werden, beispielsweise Alkalifluoride und Alkalicarboxylate (z.B. DE-PS 2 453 749, US-PS 3 354 129).

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander ortho-ständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt, z.B. sind Natrium- und Kaliumsulfid geeignet. Es können auch Alkalisulfide eingesetzt werden, die aus Hydrogensulfiden mit Alkalihydroxiden wie NaOH und KOH hergestellt werden. In jedem Fall können Mischungen sowohl der Sulfide als auch der Hydroxide eingesetzt werden.

Die Alkalisulfide können in einem oder mehreren Schritten, beispielsweise durch Abdestillieren des Wassers aus der Reaktionslösung auf übliche Art entwässert werden. Beim erfindungsgemässen Verfahren braucht die Entwässerung nicht vollständig

zu sein. Die partielle Entwässerung kann z.B. vor der Zugabe der Dihalogenverbindung der Formeln (I) und (II) vorgenommen werden.

Eventuell als Cosolvenz verwendete N,N-Dialkylcarbonsäureamide werden bevorzugt vor der Entwässerung der Alkalisulfide eingesetzt. Es ist jedoch möglich, die Cosolventien zusammen mit den Polyhalogenverbindungen zu dem entwässerten Umsetzungsgemisch zu geben.

Das Zusammengeben der Komponenten kann in beliebiger Reihenfolge erfolgen. Die Dihalogenaromaten der Formeln (I) und (II) und die Tri- bzw. Tetrahalogenaromaten der Formel (III) und die chemisch aktivierte Faser und gegebenenfalls ein Füllstoff können zusammen oder getrennt, kontinuierlich, in Portionen oder direkt auf einmal zu dem Alkalisulfid, dem Lösungsmittel oder einem Teil davon gegeben werden. So können beispielsweise Alkalisulfid zusammen mit dem Lösungsmittel oder einen Teil davon zu den Verbindungen der Formeln (I), (II) und (III) gegeben werden. Es können auch alle Komponenten direkt zusammengegeben werden. Jede andere Kombination der Zugabe der Komponenten ist ebenfalls möglich.

Erfindungsgemäss können Gemische aus meta- und para-Dihalogenaromaten der Formel (I) bzw. (II) eingesetzt werden. In diesem Fall kann das molare Verhältnis m:p höchstens 30:70 betragen.

Zur Herstellung thermoplastisch verarbeitbarer Polyphenylensulfide werden besonders bevorzugt p-Dihalogenaromaten eingesetzt.

Beispiele für erfindungsgemäss einzusetzende Dihalogenaromaten der Formel (I) sind: p-Dichlorbenzol, p-Dibrombenzol, 1-Chlor-4-brombenzol, 1,3-Dichlorbenzol und 1,3-Dibrombenzol. Sie sind allein oder im Gemisch miteinander verwendbar. Besonders bevorzugt sind 1,4-Dichlorbenzol und/oder 1,3-Dibrombenzol.

Beispielsweise für erfindungsgemäss einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäss einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trochlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Sollen verzweigte Polyarylensulfide hergestellt werden, so sollten mindestens 0,1 Mol-% eines Tri- oder Tetrahalogenaromaten der Formel (III) eingesetzt werden.

Die erfindungsgemässe Umsetzung wird bei einer Temperatur von 160°C bis 265°C, vorzugsweise 15°C bis 250°C durchgeführt.

Dem Umsetzungsgemisch werden eine chemisch aktivierte Faser und gegebenenfalls Füllstoffe zugesetzt. Als Faser können beispielsweise verwendet werden Pechfasern (Typ P-M 104 T®, Sigri/Meitingen) Aramidfasern wie Kevlarfaser® (Du Pont), Kohlenstoff-Fasern auf PAN-Basis (z.B. Typ SFC®, Laborprodukt von Sigri/Meitingen), handelsübliche Glasfasern, handelsübliche Aluminiumfasern (z.B. der Deutschen Nichimen GmbH), Asbestfasern, sowie die entsprechenden nichtfaserigen Füllstoffe, z.B. Glasmehl, Glashohlkugeln, Graphit, Russ, Aluminiumpulver, Aluminiumplättchen.

Weiterhin können gegebenenfalls als Zusatzstoffe Materialien zugegeben werden, z.B. Silikate, Alumosilikate (z.B. Mica, Asbest, Kaolin, Talkum), Calciumsilikate u.ä. (vgl. US-PS 4 425 384), einzeln und als Mischungen.

Die Fasern können durch Vorbehandlung, z.B. durch Exposition bei erhöhter Temperatur von 150 bis 500°C, einer Halogenatmosphäre wie Chlorgas, Bromdampf, vorzugsweise Chlorgas, aktiviert werden. Die Faser wird dabei in ein Gefäss, z.B. Glasrohr eingebracht, und z.B. in einem Rohrofen unter Inertgasatmosphäre, z.B. $N_2$, aufgeheizt und dann wird für ca. 1 bis 4 Stunden, vorzugsweise 2 Stunden, gegebenenfalls bei erhöhtem Druck Halogengas durch das Rohr geleitet.

Diese vorbereitete Faser enthält Halogen, das chemisch an der Faser gebunden sein kann. Sie werden dann der Umsetzungslösung zur Herstellung von Polyphenylensulfid zugegeben. Bei der Umsetzung kann dann das Polyphenylensulfid gegebenenfalls auf die Faser durch chemische Reaktion aufziehen.

Ausserdem kann die Aktivierung der genannten Stoffe z.B. durch Umsetzung mit Thionylchlorid, Ozon, konzentrierter Salpeter- und Schwefelsäure erfolgen (vgl. US-PS 4 425 384).

Die Reaktionszeit kann bis zu 12 Stunden betragèn, vorzugsweise 1 bis 9 Stunden. Eine stufenweise Steigerung der Reaktionstemperatur während dieser Zeit kann vorteilhaft sein.

Die Aufarbeitung des Reaktionsgemisches und die Isolierung der verstärkten Polyarylensulfide kann in bekannter Weise erfolgen.

Das verstärkte Polyarylensulfid kann direkt aus der Reaktionslösung oder erst nach Zugabe, z.B. von Wasser und/oder verdünnten Säuren, nach üblichen Verfahrensweisen abgetrennt werden (beispielsweise durch Filtration oder durch Zentrifugation).

Nach der Filtration schliesst sich im allgemeinen zur Entfernung von anorganischen Bestandteilen, die den Polymeren anhaften können (z.B. Rest von Alkalisulfiden und Alkalichloriden) eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das verstärkte Polymere kann auch durch Abziehen des Lösungsmittels aus dem Reaktionsraum und eine anschliessende Wäsche, wie oben beschrieben, gewonnen werden.

Die erfindungsgemässen verstärkten Polyarylensulfide können zusätzlich auch mit anderen Polymeren, mit Pigmenten und Füllstoffen, beispielsweise Graphit, Metallpulver, Glaspulver, Quarzmehl, Glasfasern, den für Polyarylensulfide üblichen Additiven, beispielsweise Stabilisatoren oder Entformungsmitteln, versetzt und mechanisch abgemischt werden.

Die erfindungsgemässen Polyarylensulfide können beispielsweise als Einbettmasse für Elektrobauteile, Dichtungsringe, Teile von Büromaschinen und Fernmeldeeinrichtungen usw. Verwendung finden.

*Beispiele*

*1. Beispiel*

Herstellung von kohlenstoffaserhaltigem Polyphenylensulfid

a) Chlorierung der Oberfläche der Kohlenstoffaser

45 g Pechfaser der Firma Sigri/Meitingen (Typ P-M 104 T, gemahlen, Faserlänge ca. 0,4 mm, Faserdurchmesser ca. 14,5 µm) wurden in ein Glasrohr aus Duran® gefüllt und in einem Rohrofen unter einem Stickstoffstrom auf 400°C aufgeheizt. Anschliessend wurde Chlorgas bei Atmosphärendruck für ca. 2 Stunden durch die Faserpackung geleitet. Nach Abkühlen auf Raumtemperatur und gleichzeitigem Spülen mit Stickstoff wurde die aktivierte Faser für die weitere Umsetzung verwendet. Durch EDS-Messungen (EDS = Energiedispersives System) konnte qualitativ Chlor auf der Oberfläche der Fasern nachgewiesen werden.

b) Herstellung von Polyphenylensulfid in Gegenwart der chlorierten Kohlenstoffaser

In einem Rundkolben aus Glas wurden vorgelegt 240 g $Na_2S \times 9H_2O$, 412 g N-Methylpyrrolidon und 25 g chlorierte Pechfaser. Der Kolbeninhalt wurde anschliessend mit $N_2$ gespült und unter Rühren langsam auf 160°C aufgeheizt, wobei sich das Natriumsulfid löst. Über eine Destillationsbrücke wird im Laufe von einer Stunde ein Gemisch von Wasser und N-Methylpyrrolidon (ca. 230 ml) abdestilliert.

Anschliessend wurde die Lösung auf ca. 80°C abgekühlt, wobei das Natriumhydrogensulfid als graubrauner Feststoff ausfällt. Bei dieser Temperatur wurden 150 g 1,4-Dichlorbenzol, gelöst in 500 ml N-Methylpyrrolidon, dem Kolbeninhalt zugesetzt und die Reaktionsmischung innerhalb von 3 Stunden auf 200°C aufgeheizt. Das Reaktionsgemisch wurde anschliessend 4 Stunden bei 200°C gerührt. Während der gesamten Reaktionszeit wurde unter $N_2$-Atmosphäre gearbeitet. Danach wurde das Reaktionsgemisch abgekühlt, wobei das Polymere und anorganische Salze ausfallen. Nach Filtration und Waschen des Feststoffes mit Wasser und Aceton wurde das Polymere im Vakuumschrank bei 80°C und 5332 Pa (40 Torr) für 12 Stunden getrocknet.

Ausbeute an Polymeren: ca. 56% der Theorie.

Eigenschaften von entsprechend hergestellten, faserfreiem Polyphenylensulfid:

$M_n$ = ca. 3600 (Bestimmung der Endgruppen durch Chloranalyse)

$M_w$ = ca. 54000 (Lichtstreuung)

Schmelzpunkt = 285°C (DSC, Aufheizrate 10°C/min)

*2. Beispiel*

Herstellung von Aramidfaser-haltigem Polyphenylensulfid

a) Chlorierung der Oberfläche der Aramidfaser

4,5 g Kevlarfaser (der Firma DuPont, geschnitten, Faserlänge ca. 6 mm, Faserdurchmesser ca. 14 µm) wurden in ein Glasrohr aus Duran® gefüllt und in einem Rohrofen unter einem Stickstoffstrom auf 200°C aufgeheizt. Anschliessend wurde Chlorgas bei Atmosphärendruck für ca. 1 Stunde durch die Faserpackung geleitet. Nach Abkühlen auf Raumtemperatur und gleichzeitigem Spülen mit Stickstoff wurde die aktivierte Faser für die weitere Umsetzung verwendet.

b) Herstellung von Polyphenylensulfid in Gegenwart der chlorierten Aramidfaser

Der Versuch wurde unter Inertgasatmosphäre (Stickstoff) ausgeführt

In einem Rundkolben aus Glas wurden vorgelegt 240 g $Na_2S \times 9H_2O$, 412 g N-Methylpyrrolidon und 4,5 g der chlorierten Aramidfaser. Der Kolbeninhalt wurde anschliessend mit $N_2$ gespült und unter Rühren langsam auf 160°C aufgeheizt, wobei sich das Natriumsulfid löst. Über eine Destillationsbrücke wird im Verlaufe einer Stunde ein Gemisch von Wasser und N-Methylpyrrolidon (ca. 220 ml) abdestilliert.

Anschliessend wurde die Lösung auf ca. 80°C abgekühlt, und bei dieser Temperatur wurden 150 g 1,4-Dichlorbenzol, gelöst in 500 ml N-Methylpyrrolidon, dem Kolbeninhalt zugesetzt und die Reaktionsmischung innerhalb von 3 Stunden auf 200°C aufgeheizt. Das Reaktionsgemisch wurde anschliessend 4 Stunden bei 200°C unter $N_2$-Atmosphäre gerührt.

Nach Abkühlen des Reaktionssgemisches wird das faserhaltige Polymere, wie im Beispiel 1 beschrieben, aufgearbeitet.

Ausbeute an Polymeren: ca. 59% der Theorie.

**Patentansprüche**

1. Verstärktes Polyphenylensulfid, dadurch gekennzeichnet, dass die Polykondensation zur Herstellung von Polyphenylensulfid in Gegenwart von chemisch durch Behandlung mit Halogen, Thionylchlorid, Ozon, konzentrierter Salpetersäure oder Schwefelsäure aktivierten Fasern oder Füllstoffen und gegebenenfalls Zusatzstoffen durchgeführt wird.

2. Verfahren zur Herstellung von gegebenenfalls verzweigten, verstärkten Polyarylensulfiden aus

a) 50-100 Mol-% Dihalogenaromaten der Formel

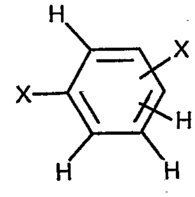

(I),

und 0-50 Mol-% Dihalogenaromaten der Formel

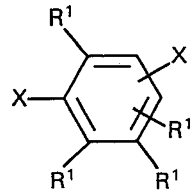

(II),

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei ortho-ständige Reste $R^1$ zu einem aromatischen oder heterocyclischen Ring verknüpft sein können und immer ein Rest $R^1$ verschieden von Wasserstoff ist und

b) 0-3 Mol-%, bevorzugt 0,1 bis 2,9 Mol-%, besonders bevorzugt 0,4 bis 2,4 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer oder heterocyclischer Rest ist,

X für Halogen steht und

n 3 oder 4 ist und

c) Alkalisulfiden, gegebenenfalls zusammen mit Alkalihydroxiden wie Natrium- und Kaliumhydroxid, wobei das molare Verhältnis von (a+b):c im Bereich von 0,85:1 bis 1,15:1 liegt, in einem organischen Lösungsmittel, gegebenenfalls unter Mitverwendung von Katalysatoren und/oder Cosolventien, dadurch gekennzeichnet, dass dem Umsetzungsgemisch chemisch durch Behandlung mit Halogen, Thionylchlorid, Ozon, konzentrierter Salpetersäure oder Schwefelsäure aktivierte Fasern und Füllstoffe und gegebenenfalls Zusatzstoffe zugesetzt werden und die Umsetzung bei einer Temperatur von 160°C bis 265°C durchgeführt wird.

3. Verfahren nach Anspruch 2, dadurch gekennzeichnet, dass mit Halogen vorbehandelte Kohlenstoffasern verwendet werden.

## Claims

1. Reinforced polyphenylene sulphide, characterized in that the poly-condensation for the preparation of polyphenylene sulphide is carried out in the presence of fibres or fillers which have been chemically activated by treatment with halogen, thionyl chloride, ozone, concentrated nitric acid or sulphuric acid and optionally in the presence of additives.

2. Process for the preparation of reinforced, optionally branched polyarylene sulphides from

a) 50-100 mol % of dihalogenated aromatic compounds corresponding to the following formula

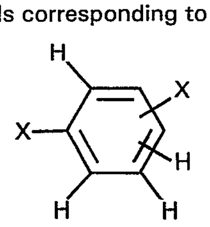

(I)

and 0-50 mol % of dihalogenated aromatic compounds corresponding to the following formula

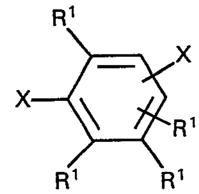

(II)

wherein

X stands for halogens in the meta or para position to one another and

$R^1$ stands for groups which may be identical or different and may denote hydrogen, alkyl, cycloalkyl, aryl, alkylaryl, or arylalkyl, and two groups $R^1$ in the ortho position to one another may be joined together to form an aromatic or heterocyclic ring and there is always one group $R^1$ which is different from hydrogen, and

b) 0-3 mol %, preferably 0.1 to 2.9 mol %, most preferably 0.4 to 2.4 mol %, based on the sum of the dihalogenated aromatic compounds corresponding to formulae I and II, of a tri- or tetrahalogenates aromatic compound corresponding to the following formula

$$ArX_n \qquad (III),$$

wherein

Ar denotes an aromatic or heterocyclic group,

X denotes halogen and

n stands for 3 or 4, and

c) alkali metal sulphides, optionally together with alkali metal hydroxides such as sodium and potassium hydroxide, the molar ratio of (a+b):c being within the range of from 0.85:1 to 1.15:1, in an organic solvent, optionally with the addition of catalysts and/or cosolvents, characterized in that fibres or fillers which have been chemically activated by treatment with halogen, thionyl chloride, ozone, concentrated nitric acid or sulphuric acid are added to the reaction mixture and additives are optionally also added and the reaction is carried out at a temperature of from 160°C to 265°C.

3. Process according to Claim 2, characterized in that carbon fibres which have been pre-treated with halogen are used.

## Revendications

1. Sulfure de polyphénylène renforcé, caractérisé en ce que la polycondensation pour la fabrication du sulfure de polyphénylène est mise en oeuvre en présence de fibres activées chimiquement par traitement par un halogène, le chlorure de thionyle, l'ozone, l'acide nitrique ou l'acide sulfurique concentrés ou de charges et éventuellement d'additifs.

2. Procédé pour la fabrication de sulfures de polyarylènes renforcés, éventuellement ramifiés, à partir de

a) 50-100 mol % de composés dihalogénoaromatiques de formule

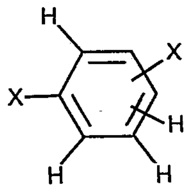

(I),

et 0-50 mol % de composés dihalogénoaromatiques de formule

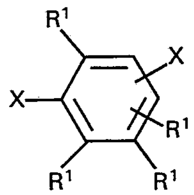

(II),

dans lesquelles

X représente des atomes d'halogènes en positions méta ou para l'un par rapport à l'autre et les

$R^1$ sont identiques ou différents et peuvent être chacun un atome d'hydrogène ou un groupe alkyle, cycloalkyle, aryle, alkylaryle ou arylalkyle, deux restes $R^1$ en ortho pouvant être reliés pour former un noyau aromatique ou hétérocyclique et un reste $R^1$ étant toujours différent de l'hydrogène, et

b) 0-3 mol %, de préférence 0,1 à 2,9 mol %, mieux encore 0,4 à 2,4 mol %, par rapport à la somme des composés dihalogénoaromatiques de formules I et II, d'un composé tri- ou tétrahalogénoaromatique de formule

$$ArX_n \quad (III),$$

dans laquelle

Ar est un reste aromatique ou hétérocyclique,

X représente un atome d'halogène, et

n est égal à 3 ou 4,et

c) de sulfures alcalins, éventuellement avec des hydroxydes alcalins tels qu'hydroxyde de sodium et hydroxyde de potassium, le rapport molaire (a + b):c étant dans l'intervalle de 0,85:1 à 1,15:1, dans un solvant organique, éventuellement avec utilisation simultanée de catalyseurs et/ou de co-solvants, caractérisé en ce que l'on ajoute au mélange de réaction des fibres ou des charges activées chimiquement par traitement par un halogène, le chlorure de thionyle, l'ozone, l'acide nitrique ou l'acide sulfurique concentrés et éventuellement des additifs et on met en oeuvre la réaction à une température de 160 à 265°C.

3. Procédé selon la revendication 2, caractérisé en ce que l'on utilise des fibres de carbone préalablement traitées par un halogène.